(19)

Europäisches
Patentamt
European
Patent Office
Office européen
des brevets

(11) **EP 1 890 368 A2**

(12) **EUROPEAN PATENT APPLICATION**

(43) Date of publication:
**20.02.2008 Bulletin 2008/08**

(51) Int Cl.:
*H02G 15/007* (2006.01)     *H02G 15/013* (2006.01)

(21) Application number: **07114514.8**

(22) Date of filing: **17.08.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **18.08.2006 DK 200600212 U**

(71) Applicant: **Olaf Johannsen ApS
6400 Sønderborg (DE)**

(72) Inventor: **Johannsen, Merete Lunde
6400, Sønderborg (DK)**

(74) Representative: **Holme Patent A/S
Vesterbrogade 20
1620 Copenhagen V (DK)**

(54) **A cable gland**

(57)     A cable gland is formed with an axially extending through passage (14, 15, 9, 16) for a cable (13). The cable gland comprises a bush (2) and a nipple (3) assembled by means of a screw joint (5,6), an annular space (9) formed in the passage, an annular seal (19) having an outer diameter $D_o$ and an inner diameter $D_i$, an incision (20) formed in the outer side of the seal (19) with a bottom (25) having a diameter $D_b$. The seal (19) is by tightening the screw joint (5,6) forced into sealing engagement with the cable (13). The value of the formula $(D_o - D_b)/D_o$ is between 0,20 and 0,55, preferable between 0,25 and 0,50 and especially between 0,30 and 0,45. The seal can be used in cable glands designed for larger cables for sealing smaller cables.

Fig. 2

Printed by Jouve, 75001 PARIS (FR)

# Description

The invention relates to a cable gland, which is formed with an axially extending through passage for a cable, and which is comprising a bush and a nipple assembled by means of a screw joint, an annular space formed between an inner shoulder in the bush and an opposite end surface on the nipple or between one or more washers placed on said end surface, an annular seal of a deformable material, which seal in its relaxed state has an outer diameter $D_o$ and an inner diameter $D_i$ and is placed in said annular space, a circumferential incision formed in the circumferential outer side of the seal with a bottom having a diameter $D_b$ and that tightening of the screw joint is causing the seal to be clamped between said shoulder and said end surface or washers and thereby to be forced into sealing engagement with a cable led through the passage.

A cable gland of this type is known from German Patent Publication No. 41 33 025 A1. The seal of this known cable gland has a cylindrical external surface and a cylindrical bore. The wall of the seal is relatively thick, whereby the possibility for axially clamping the seal sufficiently to sealing a cable which is led through the cable gland securely, is limited. Therefore, the seal is only usable for sealing cables with nearly the same outer diameter as the diameter of the bore of the seal in relaxed state.

An improvement of such seal is disclosed in UK Patent Application GB 2 280 317 A. The improvement consists in that a V-formed incision is formed in the external surface of the seal while the bore is cylindrical. However, this means that it is impossible to securely sealing cables having substantially smaller diameter than the bore of the seal.

US 2002036093 also relates to a known seal for sealing a cable led through the through passage of a cable gland. The seal is in this embodiment formed with a low groove in the external surface of the seal and a bore with a cylindrical central surface merging at each side into a truncated cone surface. The wall of the seal is relatively thin. A seal of such construction is suited only for sealing a cable with about the same diameter as the bore of the seal.

The disadvantages and drawbacks of the above mentioned known technique is remedied by, in a first object of the invention providing a seal for a cable gland of the type mentioned in the opening paragraph, in which the seal is adapted for being used for sealing cables having a larger range of sizes than hitherto known, in a second object of the invention providing a seal for a cable gland of the type mentioned in the opening paragraph, in which the seal is adapted to effectively sealing smaller cables led through the through passage of a cable gland designed to larger cables, in a third object of the invention providing a seal for a cable gland of the type mentioned in the opening paragraph adapted for sealing a cable led through the through passage of the cable gland by using less power than hitherto known.

The new and unique way in which the current invention fulfils the above-mentioned aspects consists in that $(D_o-D_b)/D_o$ is between 0,20 and 0,55, preferable between 0,25 and 0,50 and especially between 0,30 and 0,45.

By means of these dimensions is achieved a particular deep incision which advantageously allows the seal to be clamped by using only a little torque when the screw joint is tightened. The shoulder in the bush and the end surface of the nipple will, when the screw joint is tightened, clamp the seal with opposite forces whereby the seal tends to fold so that the vertex of the incision becomes smaller. That implies that the cylindrical surface of the space for the seal is acting onto the folded seal with radial forces directed inwards against the axis. The material of the seal, which is typically synthetic or natural rubber, is mainly incompressible. Said inwards-directed forces will therefore decrease the diameter of the opening of the seal and bring this into sealing engagement with the cable. The seal of the invention can be used for sealing cables in cable glands within a large range of diameter sizes.

In a preferred embodiment according to the invention $(D_o-D_i)/D_o$ can be between 0,45 and 0,85, preferable between 0,50 and 0,80 and especially between 0,55 and 0,75.

According to the invention can that the outer diameter of the seal be somewhat larger than the inner diameter of the annular space in the bush thereby preventing that the seal is rotated or twisted when tightening the screw joint.

The invention will be explained in greater detail below where further advantageous properties and example embodiments are described with reference to the drawing, in which,

Fig. 1 shows in an axial section a cable gland according to the invention in a start position for clamping a cable led through the cable gland,

Fig. 2 shows the same in a terminal position where the cable has been clamped, and

Fig. 3 shows on a larger scale an axial section of an annular seal for the cable gland.

It is well known in the art, that current-carrying conductors need to be shielded from being directly touched. Therefore, the cables with the conductors are drawn through a wall in an isolated box of some kind where the stripped conductors are connected to other stripped conductors. The lead-in of cables typically takes place by means of cable glands.

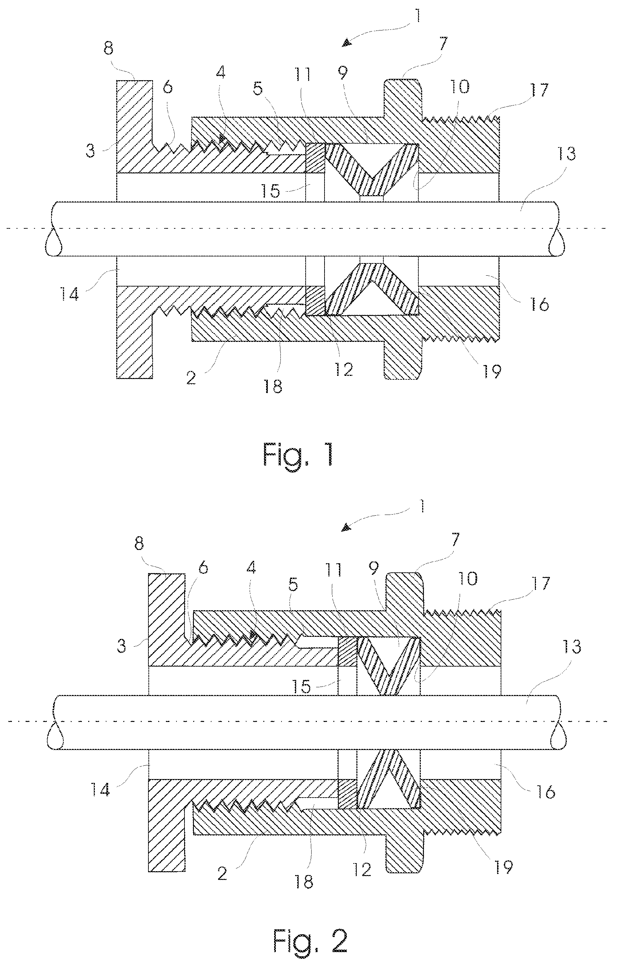

Fig. 1 and 2 shows a simple embodiment of such cable gland 1, which usually is equipped with a strain-relief (not shown).

The cable gland comprises a bush 2 and a nipple 3 assembled by means of a screw joint 4 consisting of an inner thread 5 on the bush 2 and an outer thread 6 on the nipple 3.

The bush and the nipple are equipped with screw heads 7 and 8 respectively for easily being able to tightening the screw joint.

The nipple is, as can be seen in the figures, partly screwed into the bush leaving an annular space 9 between an inner shoulder 10 in the bush and a washer 11 bearing against the end surface 12 of the nipple.

A cable 13 is led through the cable gland via an axially extending through passage 14, 15, 9, 16 in the cable gland. The through passage is consisting of an opening 14 in the nipple, an opening 15 in the washer, the annular space 9 and an opening 16 in the bush.

The bush is equipped with an outer thread 17 for connecting the cable gland to a wall (not shown) of an isolated box (not shown) so that the cable can be led into the box and the stripped conductors being connected to other stripped conductors (not shown).

The nipple is moreover at the end formed with a smooth cylindrical portion 18 of a smaller diameter than the outer thread of the nipple.

Current-carrying conductors need, as previously mentioned, to be connected in an isolated box in order to avoid that persons which unintentionally touch the conductors gets hurt.

It is necessary also to avoid that the current is led away if water or moist penetrats into the box and that persons touching such water and/moist gets an electric shock.

The cable gland therefore by means of the outer thread 17 on the bush is screwed into the wall (not shown) of the isolated box (not shown) in an isolating way, e.g. by laying a tightening washer (not shown) between the screw head 7 and said wall (not show).

There is still a link between the conductors in the isolated box and the surroundings via the through opening 14, 15, 9, 16 in the cable gland. An annular seal 19 of deformable material, e.g. synthetical or natural rubber is placed in the annular space 9 for prevention said like, thereby overcoming the problem of a direct link between the surrounding and the interior of the box.

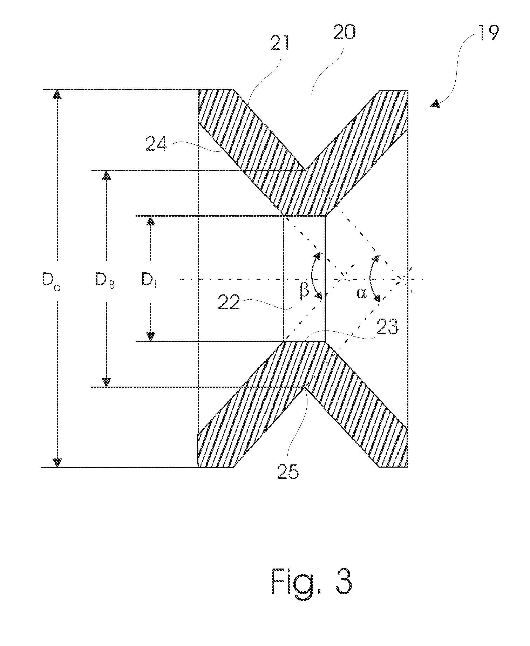

In fig. 3 such a seal is shown in its relaxed stat and on an enlarged scale.

A circumferential incision 20 is formed in the circumferential outer side of the seal. The surface of the incision consists of two symmetrical truncated cone surfaces 21 having each a vertex angle $\alpha$ of at least 75°.

The seal has a through opening 22 for passage of a cable (not shown in fig. 3). The opening of the seal is formed with a central cylinder surface 23 flanked by two symmetrical truncated cone surfaces 24 each having a vertex angle $\beta$ of at least 75°.

The vertex angles $\alpha$ and $\beta$ are in the figures of equal size but can in other embodiments have different sizes.

As shown in fig. 3 is $D_i$ denoting the diameter of the opening 22 at the cylinder surface 23, $D_b$ the diameter of the bottom 25 of the incision 20, and $D_o$ the diameter of the outer side of the seal.

The seal of the invention is characterized by the formula,

$$1. \quad (D_o - D_b)/D_o$$

$$2. \quad (D_o - D_i)/D_o$$

The value of the first formula according to the invention is between 0,20 and 0,55, preferable between 0,25 and 0,50 and especially between 0,30 and 0,45 and the value of the second formula is between 0,45 and 0,85, preferable between 0,50 and 0,80 and especially between 0,55 and 0,75.

The particular deep incision stated by the first formula implies that the seal effectively can be used with a particular large range of diameter sizes. This advantage in combination with the particular large difference between the outer and inner diameter of the seal stated by the second formula furthermore implies that the seal can fit into a cable gland for large cables and safely be used for small cables.

In fig. 1 is shown a fragmentary cable 13 led through the through opening 14, 15, 9, 16 in the cable gland 1. The seal 19 is in its relaxed state meaning that the opening 22 of the seal, in this case, doesn't fit tight around the cable, thereby allowing the cable easily to be pulled through the opening of the seal.

The nipple 3 has in fig. 2 been screwed further into the bush 2 whereby the seal 19 has been clamped between the washer 11 and the inner shoulder 10 in the bush 2 as the washer itself is abutting the end surface 12 of the nipple.

The seal could optionally have an opening with a diameter slightly larger than the outer diameter of the cable 13. Then the seal will not rotate when being clamped. The presence of the washer 11 also reduces the risk that the relatively rotation of the nipple is transferred to the seal.

The particular deep incision 20 in the seal implies advantageously that only a little torque is necessary for clamping the seal so much that a tight/watertight connection is achieved.

The deep incision also cause the seal to deform in a far more effective way than the seals disclosed in the previously mentioned documents GB 2 280 317 A and US 2002036093 where the seals, seen in section, act somewhat similar to a column deflected by an axially load. It is well known that such deflected column is able to act with only a modest force in the transverse direction at the central area of the column.

The two halves of the seal of the invention will instead be folded against each other so that the vertex angle $\alpha$ of the truncated surfaces 21 on the incision becomes smaller and the vertex angle $\beta$ of the truncated surfaces 24 in the opening 22 becomes larger.

The material of the seal is usually synthetic or natural rubber, which mainly is incompressible. The cylindrical surface of the annular space 9 in the bush 2 will in this position act upon the seal with a relatively large radial force that securely is clamping the seal tight against the cable, e.g. watertight.

By way of example can the depth of the incision of the seal in relaxed state be between 3 and 5 mm.

## Claims

1.  A cable gland formed with an axially extending through passage (14, 15, 9, 16) for a cable (13), said cable gland comprises,

    - a bush (2) and a nipple (3) assembled by means of a screw joint (5,6),
    - an annular space (9) formed between an inner shoulder (10) in the bush (2) and an opposite end surface (12) on the nipple (3) or between one or more washers (11) placed on said end surface (12),
    - an annular seal (19) of a deformable material, which seal (19) in its relaxed state has an outer diameter $D_o$ and an inner diameter $D_i$ and is placed in said annular space (9),
    - a circumferential incision (20) formed in the circumferential outer side of the seal (19) with a bottom (25) having a diameter $D_b$, and
    - that tightening of the screw joint (5,6) is causing the seal (19) to be clamped between said shoulder (10) and said end surface (12) or washers (11) and thereby to be forced into sealing engagement with a cable (13) led through the passage ((14, 15, 9, 16)),

    **characterized in**

    - **that** the value of $(D_o-D_b)/D_o$ is between 0,20 and 0,55, preferable between 0,25 and 0,50 and especially between 0,30 and 0,45.

2.  A cable gland according to claim 1, **characterized in that** the value of $(D_o-D_i)/D_o$ is between 0,45 and 0,85, preferable between 0,50 and 0,80 and especially between 0,55 and 0,75.

3.  A cable gland according to claim 1 or 2, **characterized in that** the depth of the incision (20) of the seal (19) in the relaxed state is between 2 and 6 mm, preferably between 3 and 5 mm.

4.  A cable gland according to claim 1, 2 or 3, **characterized in that** the surface of the incision (20) mainly consists of two at least in mainly symmetrical truncated cone surfaces (21).

5.  A cable gland according to any of the claim 1 - 4, **characterized in that** the vertex angle $(\alpha)$ of each of the truncated cone surfaces (21) of the incision (20) is at least 75°.

6.  A cable gland according to any of the claim 1 - 5, **characterized in that** the opening of the seal (19) is formed with a central cylindrical surface (23) flanked by two symmetrical truncated cone surfaces (24).

7.  A cable gland according to any of the claim 1 - 6, **characterized in that** the vertex angle $(\beta)$ of each of the truncated cone surfaces of the opening in the seal (19) is at least 75°.

8.  A cable gland according to any of the claim 1 - 7, **characterized in that** the vertex angle $(\alpha)$ of the truncated cone surfaces of the incision (20) is about the same as the vertex angle $(\beta)$ of the cone surfaces of the opening.

9.  A cable gland according to any of the claim 1 - 8, **characterized in that** each of the opposite end surfaces (12) of the seal (19) is substantially plane and that the inner shoulder (10) in the bush (2) and the opposite on the nipple (3) each is substantially plane.

10. A cable gland according to any of the claim 1 - 9, **characterized in that** the outer diameter of the seal (19) is somewhat larger than the inner diameter of the annular space (9) in the bush (2).

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4133025 A1
- GB 2280317 A
- US 2002036093 A